Europäisches Patentamt

European Patent Office

Office européen des brevets

(19)

(11) **EP 0 967 189 B1**

(12) **EUROPEAN PATENT SPECIFICATION**

(45) Date of publication and mention
of the grant of the patent:
**06.11.2002 Bulletin 2002/45**

(51) Int Cl.[7]: **C04B 38/00**, C04B 41/53,
C04B 35/573

(21) Application number: **99304841.2**

(22) Date of filing: **21.06.1999**

(54) **A highly resistive recrystallized silicon carbide, an anti-corrosive member, a method for producing the highly resistive recrystallized silicon carbide, and a method for producing the anti-corrosive member**

Rekristallisiertes Siliziumkarbid mit hohem Widerstand, antikorrosives Bauteil, Verfahren zur Herstellung des rekristallisierten Siliziumkarbids mit hohem Widerstand, und Verfahren zur Herstellung des antikorrosiven Bauteils

Carbure de silicium recristallisé ayant une résistance élevée, pièce anti-corrosive, procédé de fabrication de carbure de silicium recristallisé ayant une résistance élevée, et procédé de fabrication de pièce anti-corrosive

(84) Designated Contracting States:
**DE FR GB**

(30) Priority: **23.06.1998 JP 17594298**

(43) Date of publication of application:
**29.12.1999 Bulletin 1999/52**

(73) Proprietor: **NGK INSULATORS, LTD.**
**Nagoya-City, Aichi Prefecture 467-8530 (JP)**

(72) Inventors:
• **Aihara, Yasufumi**
**Sunnyvale, California 94086 (US)**
• **Inoue, Katsuhiro**
**Ama-gun, Aichi Pref. (JP)**

(74) Representative: **Paget, Hugh Charles Edward et al**
**MEWBURN ELLIS**
**York House**
**23 Kingsway**
**London WC2B 6HP (GB)**

(56) References cited:
**EP-A- 0 826 646**

• **PATENT ABSTRACTS OF JAPAN vol. 014, no. 326 (C-0740), 12 July 1990 (1990-07-12) & JP 02 116678 A (IBIDEN CO. LTD.), 1 May 1990 (1990-05-01)**
• **DATABASE WPI Week 7803 Derwent Publications Ltd., London, GB; AN 78-05607A XP002115224 "Silicon carbide body preparation for semiconductors" & JP 52 145419 A (TOSHIBA CERAMICS CO.), 3 December 1977 (1977-12-03)**

**Description**

Background of the Invention

Field of the Invention:

This invention relates to an anti-corrosion member comprising a substrate made of recrystallized silicon carbide having a relatively high electric resistance, a method for producing a recrystallized silicon carbide and a method of producing an anti-corrosive member.

Related Art Statement:

A recrystallized silicon carbide has normally low volume resistivity of about 0.1 $\Omega \cdot$cm to 50 $\Omega \cdot$cm at a low temperatures under 500°C, and does not have a characteristic as a semiconductor which features silicon carbide. Thus, use of recrystallized silicon carbide has been limited as a refractory.

To provide a semiconductive characteristic of the recrystallized silicon carbide, NGK Insulators, Ltd. has disclosed in Japanese Patent application No. 10-72644 that, by controlling a firing atmosphere when recrystallizing silicon carbide, the resistance of the recrystallized silicon carbide can be increased. Although the method was quite effective, it has had still a problem of a fluctuation in the resistance depending on a number of shaped bodies in fire-casing or a shaping position thereof. Moreover, there have been a problem that if a SiC film is formed, by a chemical vapor deposition, on a surface of a substrate, which is composed of a recrystallized silicon carbide having a higher volume resistivity, the resistivity of the substrate is decreased to a value of not more than 50 $\Omega \cdot$cm.

EP-A-826646 describes a highly corrosion-resistant silicon carbide product, prepared by sintering a green product of pressed powder of high purity. To test its corrosion resistance, the product is immersed in 50% hydrofluoric acid and under pressure at 190°C in 1:1 mixed solution of hydrofluoric acid and nitric acid.

SUMMARY OF THE INVENTION

It is an object of the present invention to provide a recrystallized silicon carbide having a large volume resistivity and a method for producing the same.

It is another object of the present invention to provide an anti-corrosion member having a silicon carbide film on a surface of the substrate of such a recrystallized silicon carbide, said silicon carbide film having higher anti-corrosion properties and a lower resistivity than the substrate.

In a first aspect, the invention provides an anti-corrosion member as set out in claim 1.

In a second aspect, the invention provides the method of producing a recrystallized silicon carbide of claim 4.

In a third aspect, the invention provides the method of producing an anti-corrosion member set out in claim 10.

The inventors have investigated the electric resistance in recrystallized silicon carbides in detail. Consequently, they found that the resistivity of the recrystallized silicon carbide is dominated by low resistive layered carbon (C) generated on inner surfaces of open pores and, by removing the low resistive layer through etching, the recrystallized silicon carbide is enabled to have a higher resistance.

For example, they have successfully produced a recrystallized silicon carbide having a resistivity of not less than 10,000 $\Omega \cdot$cm by thermally treating it preferably at a temperature of not less than 100°C in a state that it is dipped in a solution of acid, and removing the low resistive layered carbons on the inner surfaces of the open pores so that such carbon is substantially or entirely absent.

Any kind of acid can be used if it penetrates into the open pores of the recrystallized silicon carbide and etches the inner wall surfaces of the open pores. It is preferable, however, that a solution of acid contains at least hydrofluoric acid. In this case, it is desirable that the acid solution is a mixed solution of hydrofluoric acid and nitric acid, or a mixed solution of hydrofluoric acid, nitric acid, and sulfuric acid.

Etching temperature is preferably not less than 100°C, more preferably not less than 150°C.

The recrystallized silicon carbide preferably has a following characteristic.

(1) A porous sintered body having an amount of impurities of not more than 0.5 wt% except Si and C and a relative density of 80% to 90%.

(2) A porous sintered body having an amount of impurities of not more than 2.0 wt% except Si and C and a relative density of not less than 70%.

The pre-etched recrystallized silicon carbide can be produced by a normal method, in which a shaped body is formed from powdery raw material of silicon carbide by a casting, etc., thereafter, is thermally treated at a temperature of 2200°C to 2400°C, for example, and thereby the recrystallized silicon carbide can be obtained.

Preferably the higher resistive recrystallized silicon carbide has a resistivity of not less than 100,000 $\Omega\cdot$cm at room temperature, and preferably the amount of impurities except Si and C is not more than 0.2 wt% and layered carbons on the inner surfaces of the open pores are at least partially removed, preferably absent.

The inventors also have investigated many firing methods for attaining still higher resistance. Consequently, they found that, by heating a shaped body to a given temperature range of 1600°C through 2000°C from room temperature under a pressure of not more than 0.01 atm, introducing the inert gas up to a pressure of 0.5 atm to 2 atm, and thereafter heating the resulting material to a temperature in a range of 2200°C to 2400°C, the recrystallized silicon carbide is enabled to be highly purified and by thermally treating the highly purified-recrystallized silicon carbide at a temperature of not less than 100°C in a state of dipping it in a mixed acidic solution, the low resistive layered carbons can be removed, and thereby the recrystallized silicon carbide having a resistivity of not less than 100,000 $\Omega\cdot$cm at room temperature can be produced.

In that case, it is preferable to heat the shaped body to a temperature in a range of 1600°C through 2000°C from a room temperature at a pressure of not more than 0.01 atm, thereafter introduce an inert gas to a pressure of 0.5 atm to 2 atm, evacuate up to a pressure of not more than 0.01 atm, introduce the inert gas up to a pressure in a range of 0.5 atm to 2 atm, and thereafter heat the resulting material to a temperature in a range of 2200°C to 2400°C.

In the case of heating a liquid such as an extrapure water or a sterilized water, for preventing it from being contaminated, it is, sometimes, heated by a heater covered with a Teflon resin. Concretely, it is known that the surface of stick-like metallic heat-generating body is coated with Teflon to obtain a heater which is put into a container with a solution, or that the inner wall surface of a container is coated with Teflon and the container is heated from outside. Recently, in addition to the extrapure water and a sterilized water, a super highly pure corrosive solution containing a mixed acid of hydrofluoric acid, nitric acid, hydrochloric acid, aqua regia, or the like have been required to be heated without any contamination of metallic ions or organic substances.

The purity of the silicon carbide film is preferably not less than 99.9999%. The thickness of the substrate is preferably not less than 8 mm.

The silicon carbide film is preferably highly purified and composed of a perfect dense body having a theoretical density, which is unlikely to be corroded with various solutions. In the anti-corrosive member according to this invention, an entire surface of a part of the substrate to be contacted with a solution therein is covered with a high purity and dense silicon carbide film, so that the substrate containing a large amount of impurities is not contacted with the solution. Therefore, contamination of the solution to be heated is very little and almost neglectable. Consequently, the contamination degree of the solution can be decreased to a level under ppt demanded for a extrapure water. Moreover, the corrosion rate of the above silicon carbide film is very slow, so that its characteristics can be kept good for a long time. Since the contacting surface of the film to a corrosive substance is directly heated, a heating efficiency to the corrosive substance is higher.

Especially, since the silicon carbide film contacting to the corrosive substance is controlled to the resistivity of 20 $\Omega\cdot$cm to 500 $\Omega\cdot$cm, a voltage can be applied the film. Thereby, without special means for power supply, the film has an adequate heat-generating value as a heater. If the resistivity of the silicon carbide film is smaller than 20 $\Omega\cdot$cm, excessive current may be required to pass the electrode, which makes the size of the power supply larger and requires special parts such as a thyristor. If the resistivity is larger than 500 $\Omega\cdot$cm, the current to the electrodemay besmall, so that the film does not work as a heater.

In the case of induction-heating the corrosive substance, if the resistivity is smaller than 20 $\Omega\cdot$cm, the substrate sometimes suffers from destruction due to thermal shock generated by rapid heating, and if the resistivity is larger than 500 $\Omega\cdot$cm, the heat generating value becomes small, so that the corrosive substance can not be heated.

The anti-corrosive member according to the present invention has advantageously a higher heating efficiency to be capable of heating the corrosive substance uniformly, especially because heat is generated at the plane of the film, of which resistivity is controlled uniformly. A large variations of the resistance-distribution of the silicon carbide film causes a current to be concentrated to a position with a low resistance, and thereby an area of a part to be contacted with a solution or a gas in the heat-generating part of the film is decreased relatively, so that a heat-generating efficiency of the film degrades.

As the above corrosive substance, the above-mentioned corrosive solution is an example. In semiconductor-manufacturing, for example, dense parts to be exposed to a reactive plasma gas are demanded. Such reactive plasma gas as $CF_4$, $NF_3$, $ClF_3$, HF, HCl, or HBr has an intense corrosion. Accordingly, a part to heat the above intensely corrosive gas in an airtight container has been demanded, and the present anti-corrosive member can be applied to such a part.

## BRIEF DESCRIPTION OF THE DRAWINGS

For a better understanding of this invention, reference is made to the attached drawings, wherein:

Fig. 1 is a schematic view showing an equipment for etching a recrystallized silicon carbide in Experiment A,

Fig. 2 is a schematic view to explain a measuring method of volume resistivity, and

Fig. 3 is a schematic view showing an equipment for etching treatment to a recrystallized silicon carbide in Experiment B.

Examples:

In the following examples, the purity of the starting materials was selected so that the sintered silicon carbide body has an impurity amount (components other than Si and C) of not more than 0.2 wt%.

(Experiment A)

As a starting material, 45 parts by weight of coarse-powdery silicon carbide with the average particle size of 100 μm and 55 parts by weight of fine-powdery silicon carbide with the average particle size of 2 μm were mixed, and thereafter 20 parts by weight of water and 2 parts by weight of binder were added to the thus obtained mixture, to obtain a slurry. The slurry was poured into a mold with a dimension of 100 mm by 100 mm, a depth of 20 mm made of plaster, and thereby a shaped body was formed in a density of 2.6 g/cc and a porosity of 20%.

The thus shaped body was heated to 2200°C andheld in the same temperature for 2 hours under Ar atmosphere of 1 atm pressure, in a high temperature-atmospheric furnace (carbon furnace), to obtain a sintered body of recrystallized silicon carbide.

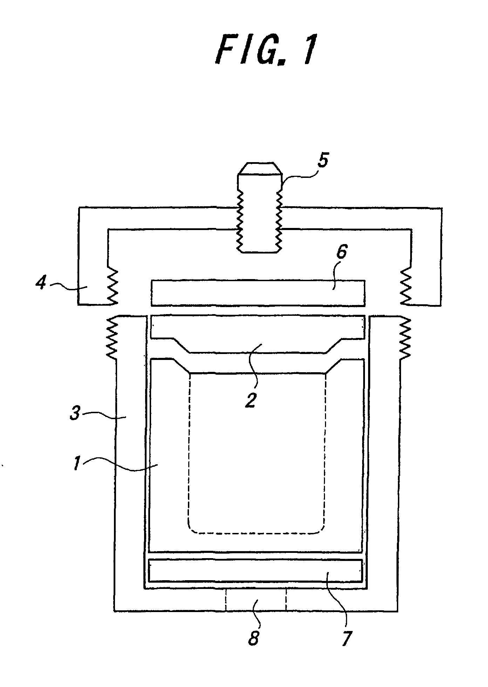

Six cc of hydrofluoric acid, 5 cc of nitric acid, and 4 cc of hydrosulphuric acid were mixed and 15 cc of water was added to the thus obtained mixture to obtain a solution of the mixed acid. A rectangular parallelpiped sample with a dimension of 3 mm × 4 mm × 40 mm was cut out of the above sintered body. Then, the sample was dipped into the solution of mixed acid in a container 1 and the container 1 was accommodated into a container 3 as shown in Fig. 1, and thermally treated at 150°C for 16 hours.

In Fig. 1, the container 1 made of Teflon is accommodated into the holding container 3 made of stainless steel and a lid 2 made of Teflon is fitted into the container 1 of Teflon. A lower board 7 is laid below the container 1 and a hole 8 to release a gas is provided below the lower board 7. An upper board 6 is set on the lid 2. The sample is accommodated into the container 1 of Teflon with the solution of the mixed acid, the lid 2 is fitted, the upper board 6 is set. Then, a lid 4 made of stainless steel is fitted to the container 3, the upper board 6 being pressed down by a tightening bolt, and thereafter the sample is heated.

The temperature in etching with the solution of mixed acid was changed as shown in Table 1 and the holding time at each temperature of etching was 16 hours. The above sample before etching (Comparative Example 1) and each sample shown in Table 1 were measured with respect to a volume resistivity at room temperature. The thus obtained results are given in Table 1.

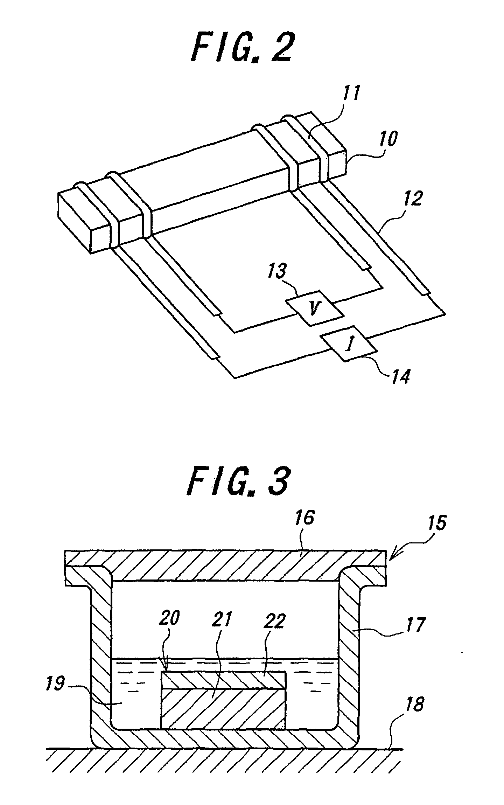

In measuring the volume resistivity, as shown in Fig. 2, a rectangular parallelpiped sample 10 with a dimension of 3 mm × 4 mm × 40 mm was cut out of each of the sintered bodies. Then, conducting wires 12 made of platinum were wound around four positions of the sample 10 and connected to an ammeter 14 and a voltmeter 13, and the electric resistivity of each of the above samples was measured by a four probe method. For making sure the conduction between the sample 10 and the conducting wires 12, a platinum paste 11 was applied between the conducting wires and the surface of the sample. A constant current was flow between the two outer conducting wires (current terminals) of the four conducting wires 12, and at this time, the voltage between two inner conducting wires (voltage terminals) was measured. The measurement was carried out in a room kept at 20°C. An electric resistivity was calculated from the following equation.

Electric resistivity = (the width of the sample × the thickness of the sample

× the voltage)/(the distance between the voltage terminals × the current)

Table 1

|  | Acid etching | Temperature at acid etching (°C) | Volume resistivity at room temperature (Ω·cm) |
|---|---|---|---|
| Example 1 | etched | 150 | 20000 |
| Example 2 | etched | 100 | 11000 |

Table 1   (continued)

|  | Acid etching | Temperature at acid etching (°C) | Volume resistivity at room temperature (Ω·cm) |
|---|---|---|---|
| Example 3 | etched | 200 | 22000 |
| Comparative Example 1 | not etched | - | 5 |

As is apparent from the results, the volume resistivity at room temperature of the recrystallized silicon carbide according to the present invention's treatment was remarkably increased. The solution of the mixed acid penetrated into the open pores of the recrystallized silicon carbide in Example 1 to Example 3 and the inner wall surfaces of the open-pores were etched. The temperature in the above etching is preferably not less than 100°C, more preferably 150°C to 200°C.

(Experiment B)

In a similar way to Experiment A, a shaped body was formed, and thereafter accommodated into a firing furnace having a interior volume of 1000 liters and an effective volume of 200 liters (an interior volume of a casing made of carbon). Then, the furnace was heated up to a temperature of 2300°C in 14 hours under a pressure of 1 atm and held at the same temperature for 5 hours with Ar gas flowing at a rate of 30 liters/min, and thereby a sintered body of a recrystallized silicon carbide was produced. The resistivity at room temperature of the thus obtained sintered body was 2000 Ω·cm.

Next, the sintered body of recrystallized silicon carbide was set into a CVD equipment, and thereafter a film-forming was carried out at a temperature of 1430°C for 5 hours employing, as gas sources, silicon tetrachloride gas and methane gas. A rectangular parallelpiped sample was cut out, in a dimension of 3 mm × 4 mm × 40 mm, of the recrystallized silicon carbide layer in the thus obtained CVD-SiC/recrystallized silicon carbide-laminate. Then, the resistivity at room temperature of the sample was measured. The thus measured results are given in Table 2 (Comparative Example 2).

Six cc of hydrofluoric acid, 5 cc of nitric acid, and 4 cc of sulfuric acid were mixed and 15 cc of water was added to the thus obtained mixture to obtain a solution of the mixed acid. As shown in Fig. 3, the layered body 20 composed of the CVD-SiC film 22 and the substrate 21 of recrystallized silicon carbide was dipped into the solution 19 of the mixed acid and accommodated into a container body 15 shown in Fig. 3. Hereupon, the container 15 is made of Teflon, composed of a body 17 and a lid 16, the laminate 20 is accommodated in the container with the solution 19 of the mixed acid. The container 15 was set on a hot plate 18 and heated at a temperature of 150°C for 16 hours. A rectangular parallelpiped sample was cut out, in a dimension of 3 mm × 4 mm × 40 mm, of the substrate of the recrystallized silicon carbide in the laminate after thermally treatment. Then, the resistivity at room temperature of the sample was measured. The thus obtained results are listed in Table 2. Moreover, the volume resistivity at room temperature of the CVD-SiC film after etching was 40 Ω·cm.

Table 2

|  | Acid etching | Volume resistivity at room temperature (Ω·cm) |
|---|---|---|
| Example 4 | etched | 50000 |
| Comparative Example 2 | not etched | 30 |

(Experiment C)

Followed by a similar way to Experiment A, a shaped body was formed and thereafter accommodated into a carbon furnace. After the interior of the furnace was vacuum-evacuated up to a pressure of not more than 0.01 atm, heating was started. When the interior was heated to a temperature of 2000°C, Ar gas was introduced into the furnace up to a pressure of 1 atm. After the introduction of Ar gas, the interior was heated to a temperature of 2200°C and held at the same temperature for 5 hours, to obtain a sintered body of recrystallized silicon carbide. The resistivity at room temperature of the thus obtained sintered body was 5,300 Ω·cm

(Comparative Example 3).

A rectangular parallelpiped sample was cut out, in a dimension of 3 mm × 4 mm × 40 mm, of the sintered body of above Comparative Example 3. Then, the sample was dipped into the same mixed acidic solution as that of Experiment A and thermally treated at a temperature of 150°C for 16 hours. The resistivity at room temperature of the thermally treated sample was 210,000 $\Omega$·cm (Example 5).

(Experiment D)

In a similar way to Experiment C, the same sintered body of recrystallized silicon carbide as that of Comparative Example 3 was formed. A CVD-SiC film was formed on the sintered body by a similar way to Experiment B, and thereby a laminate composed of the CVD-SiC film and a substrate of the recrystallized silicon carbide was obtained. A rectangular parallelpiped sample was cut out, in a dimension of 3 mm × 4 mm × 40 mm, of the substrate in the layered body. The resistivity at room temperature of the sample was 50 $\Omega$·cm (Comparative Example 4).

The remainder of the laminate after cutting out the sample was etched by a similar way to Experiment B. A rectangular parallelpiped sample was cut out, in a dimension of 3 mm × 4 mm × 40 mm, of the substrate of the recrystallized silicon carbide in the etched layered body. The resistivity at room temperature of the sample was 170,000 $\Omega$·cm (Example 6).

(Experiment E)

In a similar way to Experiment A, a shaped body was formed and thereafter accommodated into a carbon furnace. After the interior of the furnace was vacuum-evacuated up to a pressure of not more than 0.01 atm, heating was started, and, when the interior was heated to a temperature of 2000°C, Ar gas was introduced into the furnace up to a pressure of 1 atm. After the introduction of Ar gas, heating was started again, and the interior was held at a temperature of 2300°C for 5 hours, to obtain a sintered body of recrystallized silicon carbide. The resistivity at room temperature of the thus obtained sintered body was 7,400 $\Omega$·cm

(Comparative Example 6).

A rectangular parallelpiped sample was cut out, in a dimension of 3 mm × 4 mm × 40 mm, of the sintered body. Then, the sample was dipped into the same solution as that of Experiment A and heated at a temperature of 150°C for 16 hours. The resistivity at room temperature of the thermally treated sample was 10,000,000 $\Omega$·cm (Example 7).

As above-mentioned, according to the present invention, a recrystallized silicon carbide with a large volume resistivity and a method for producing the same can be provided. Moreover, an anti-corrosive member having a silicon carbide film, on a surface of a substrate made of highly resistive recrystallized silicon carbide, can be provided with a large anti-corrosion and a smaller volume resistivity than that of the surface.

**Claims**

1. An anti-corrosion member, comprising a substrate made of recrystallized silicon carbide having open pores and a film of silicon carbide having a resistivity at room temperature of 20 $\Omega$·cm to 500 $\Omega$·cm covering a surface of the substrate which is to be exposed in use to a corrosive substance, wherein in the substrate layered carbons on the inner wall surfaces of the open pores are removed and the resistivity at room temperature of said recrystallized silicon carbide is not less than 10000 $\Omega$·cm.

2. An anti-corrosion member according to claim 1 wherein the resistivity at room temperature of said recrystallized silicon carbide of the substrate is not less than 100000 $\Omega$·cm.

3. An anti-corrosion member according to claim 1 or claim 2, wherein the amount of impurities except Si and C in said recrystallized silicon carbide is not more than 0.2 wt%.

4. A method of producing a highly resistive recrystallized silicon carbide, comprising the steps of forming a shaped body comprising silicon carbide powder, heating the shaped body up to a temperature in the range 1600°C to 2000°C from room temperature at a pressure of not more than 1 kPa (0.01 atm), thereafter introducing an inert gas to a pressure in a range of 50 to 200 kPa (0.5 to 2 atm) and heating the resulting material to a temperature in the range 2200°C to 2400°C to obtain a body of recrystallized silicon carbide having open pores; and heat treating the material immersed in a solution of acid to etch the inner wall surfaces of the open pores.

5. A method according to claim 4 wherein the step of introducing inert gas comprises introducing the inert gas to a pressure of 50 to 200 kPa (0.5 to 2 atm), evacuating to a pressure of not more than 1 kPa (0.01 atm), introducing the inert gas again up to a pressure in the range 50 to 200 kPa (0.5 to 2 atm).

6. A method according to claim 4 or claim 5 wherein the temperature of the heat treatment in acid solution is not less than 100°C.

7. A method according to any one of claims 4 to 6 wherein the acid solution contains at least hydrofluoric acid.

8. A method according to claim 7 wherein the acid solution contains hydrofluoric acid and nitric acid.

9. A method according to claim 7 wherein the acid solution contains hydrofluoric acid, nitric acid and sulfuric acid.

10. A method of producing an anti-corrosion member, comprising the steps of preparing a body of recrystallized silicon carbide having open pores, forming a film of silicon carbide with a resistivity at room temperature of 20 $\Omega$·cm to 500 $\Omega$·cm, by CVD on at least a surface of the body which which is to be exposed to corrosive substance to obtain a laminate and thereafter heat treating the laminate immersed in a solution of acid, to etch the inner wall surfaces of the open pores.

11. A method according to claim 10, wherein the body of recrystallized silicon carbide is prepared by the steps of forming a shaped body comprising silicon carbide powder, heating the shaped body up to a temperature in the range 1600°C to 2000°C from room temperature at a pressure of not more than 1 kPa (0.01 atm), thereafter introducing an inert gas to a pressure in the range 50 to 200 kPa (0.5 to 2 atm) and heating the resulting material to a temperature in the range 2200°C to 2400°C.

12. A method according to claim 11 wherein the step of introducing inert gas comprises introducing the inert gas to a pressure of 50 to 200 kPa (0.5 to 2 atm), evacuating to a pressure of not more than 1 kPa (0.01 atm), and introducing the inert gas again up to a pressure in the range 50 to 200 kPa (0.5 to 2 atm).

13. A method according to claims 10 to 12, wherein the acid solution contains at least hydrofluoric acid.

14. A method according to claim 13 wherein the acid solution contains hydrofluoric acid and nitric acid.

15. A method according to claim 14 wherein the acid solution contains hydrofluoric acid, nitric acid and sulphuric acid.

16. A method according to claims 10 to 15 wherein the temperature of the heat treatment in acid solution is not less than 100°C.


**Patentansprüche**

1. Korrosionshemmendes Element, das ein Substrat aus umkristallisiertem Siliziumcarbid mit offenen Poren und einen Film aus Siliziumcarbid mit einem spezifischen elektrischen Widerstand bei Raumtemperatur von 20 $\Omega$·cm bis 500 $\Omega$·cm umfasst, der eine Oberfläche des Substrats bedeckt, die bei Verwendung einer korrodierenden Substanz ausgesetzt werden soll, wobei im Substrat Kohleschichten an den Innenwandflächen der offenen Poren entfernt sind und der spezifische elektrische Widerstand des umkristallisierten Siliziumcarbids bei Raumtemperatur nicht unter 10.000 $\Omega$·cm liegt.

2. Korrosionshemmendes Element nach Anspruch 1, worin der spezifische elektrische Widerstand des umkristallisierten Siliziumcarbids des Substrats bei Raumtemperatur nicht unter 100.000 $\Omega$.cm liegt.

3. Korrosionshemmendes Element nach Anspruch 1 oder 2, worin die Menge an Verunreinigungen mit Ausnahme von Si und C im umkristallisierten Siliziumcarbid nicht über 0,2 Gew.-% liegt.

4. Verfahren zur Herstellung von hochbeständigem umkristallisiertem Siliziumcarbid, umfassend die Schritte des Ausbildens eines Formkörpers, der Siliziumcarbidpulver umfasst, des Erhitzens des Formkörpers auf eine Temperatur im Bereich von 1.600 °C bis 2.000 °C, ausgehend von Raumtemperatur, bei einem Druck von nicht mehr als 1 kPa (0,01 Atm), des anschließenden Einleitens eines Inertgases bis zu einem Druck im Bereich von 50 bis 200 kPa (0,5 bis 2 Atm) und des Erhitzens des resultierenden Materials auf eine Temperatur im Bereich von 2.200 °C bis 2.400 °C, um einen Körper aus umkristallisiertem Siliziumcarbid mit offenen Poren zu erhalten; sowie der Wärmebehandlung des in eine Säurelösung eingetauchten Materials, um die Innenwandflächen der offenen Poren zu ätzen.

5. Verfahren nach Anspruch 4, worin der Schritt des Einleitens von Inertgas das Einleiten des Inertgases bis zu einem Druck von 50 bis 200 kPa (0,5 bis 2 Atm), das Evakuieren bis zu einem Druck von nicht mehr als 1 kPa (0,01 Atm) und das erneute Einleiten des Inertgases bis zu einem Druck im Bereich von 50 bis 200 kPa (0,5 bis 2 Atm) umfasst.

6. Verfahren nach Anspruch 4 oder 5, worin die Temperatur der Wärmebehandlung in der Säurelösung nicht unter 100 °C liegt.

7. Verfahren nach einem der Ansprüche 4 bis 6, worin die Säurelösung zumindest Flusssäure enthält.

8. Verfahren nach Anspruch 7, worin die Säurelösung Flusssäure und Salpetersäure enthält.

9. Verfahren nach Anspruch 7, worin die Säurelösung Flusssäure, Salpetersäure und Schwefelsäure enthält.

10. Verfahren zur Herstellung eines korrosionshemmenden Elements, umfassend die Schritte des Herstellens eines Körpers aus umkristallisiertem Siliziumcarbid mit offenen Poren, des Ausbildens eines Films aus Siliziumcarbid mit einem spezifischen elektrischen Widerstand bei Raumtemperatur von 20 Ω·cm bis 500 Ω·cm durch CVD-Verfahren auf zumindest einer Oberfläche des Körpers, die korrodierender Substanz ausgesetzt werden soll, um einen Verbundstoff zu erhalten, und daraufhin der Wärmebehandlung des in eine Säurelösung eingetauchten Verbundstoffs, um die Innenwandflächen der offenen Poren zu ätzen.

11. Verfahren nach Anspruch 10, worin der Körper aus umkristallisiertem Siliziumcarbid durch die Schritte des Ausbildens eines Siliziumcarbidpulver umfassenden Formkörpers, des Erhitzens des Formkörpers auf eine Temperatur im Bereich von 1.600 °C bis 2.000 °C, ausgehend von Raumtemperatur, bei einem Druck von nicht mehr als 1kPa (0,01 Atm), des anschließenden Einleitens eines Inertgases bis zu einem Druck im Bereich von 50 bis 200 kPa (0,5 bis 2 Atm) und des Erhitzens des resultierenden Materials auf eine Temperatur im Bereich von 2.200 °C bis 2.400 °C hergestellt wird.

12. Verfahren nach Anspruch 11, worin der Schritt des Einleitens von Inertgas das Einleiten des Inertgases bis zu einem Druck von 50 bis 200 kPa (0,5 bis 2 Atm), das Evakuieren auf einen Druck von 1 kPa (0,01 Atm) und das erneute Einleiten des Inertgases bis zu einem Druck im Bereich von 50 bis 200 kPa (0,5 bis 2 Atm) umfasst.

13. Verfahren nach Anspruch 10 bis 12, worin die Säurelösung zumindest Flusssäure enthält.

14. Verfahren nach Anspruch 13, worin die Säurelösung Flusssäure und Salpetersäure enthält.

15. Verfahren nach Anspruch 14, worin die Säurelösung Flusssäure, Salpetersäure und Schwefelsäure enthält.

16. Verfahren nach Anspruch 10 bis 15, worin die Temperatur der Wärmebehandlung in der Säurelösung nicht unter 100 °C liegt.

**Revendications**

1. Pièce anti-corrosive, composée d'un substrat en carbure de silicium recristallisé présentant des pores ouverts et une pellicule de carbure de silicium présentant une résistivité à température ambiante de 20 Ω.cm à 500 Ω.cm, couvrant une surface du substrat destinée à être exposée à une substance corrosive, dans laquelle les carbones stratifiés sur les surfaces des parois internes des pores ouverts sont éliminés et la résistivité à température ambiante dudit carbure de silicium recristallisé est supérieure ou égale à 10 000 Ω.cm.

2. Pièce anti-corrosive selon la revendication 1, dans laquelle la résistivité à température ambiante dudit carbure de silicium recristallisé du substrat est supérieure ou égale à 100 000 Ω.cm.

3. Pièce anti-corrosive selon la revendication 1 ou à la revendication 2, dans laquelle la quantité d'impuretés, excepté Si et C, dans ledit carbure de silicium recristallisé est inférieure ou égale à 0,2 % en poids.

4.  Procédé permettant de produire un carbure de silicium recristallisé hautement résistif, comprenant la formation d'un corps profilé composé d'une poudre de carbure de silicium, le chauffage du corps profilé jusqu'à une température comprise entre 1600°C et 2000°C, à partir de la température ambiante, à une pression inférieure ou égale à 1 kPa (0,01 atm), puis l'introduction d'un gaz inerte jusqu'à obtention d'une pression comprise entre 50 et 200 kPa (0,5 à 2 atm) et le chauffage du produit obtenu jusqu'à une température comprise entre 2200°C et 2400°C, afin d'obtenir un corps de carbure de silicium recristallisé présentant des pores ouverts et enfin le traitement thermique du matériau immergé dans une solution acide afin de produire une attaque chimique à l'acide des surfaces des parois internes des pores ouverts.

5.  Procédé selon la revendication 4, dans lequel l'étape d'introduction d'un gaz inerte comprend l'introduction du gaz inerte jusqu'à obtention d'une pression de 50 à 200 kPa (0,5 à 2 atm), l'évacuation jusqu'à obtention d'une pression inférieure ou égale à 1 kPa (0,01 atm), une nouvelle introduction du gaz inerte jusqu'à obtention d'une pression comprise entre 50 et 200 kPa (0,5 à 2 atm).

6.  Procédé selon la revendication 4 ou la revendication 5, dans lequel la température du traitement thermique dans la solution acide est supérieure ou égale à 100°C.

7.  Procédé selon l'une quelconque des revendications 4 à 6, dans lequel la solution acide contient au moins de l'acide fluorhydrique.

8.  Procédé selon la revendication 7, dans lequel la solution acide contient de l'acide fluorhydrique et de l'acide nitrique.

9.  Procédé selon la revendication 7, dans lequel la solution acide contient de l'acide fluorhydrique, de l'acide nitrique et de l'acide sulfurique.

10. Procédé de production d'une pièce anti-corrosive, comprenant la préparation d'un corps de carbure de silicium recristallisé présentant des pores ouverts, la formation d'une pellicule de carbure de silicium avec une résistivité à température ambiante de 20 Ω.cm à 500 Ω.cm, par CVD sur au moins une surface du corps destiné à être exposé à la substance corrosive afin d'obtenir un stratifié, puis le traitement thermique du stratifié plongé dans une solution acide, afin de provoquer une attaque chimique à l'acide des surfaces des parois internes des pores ouverts.

11. Procédé selon la revendication 10, dans lequel le corps de carbure de silicium recristallisé est préparé par la formation d'un corps profilé comprenant une poudre de carbure de silicium, le chauffage du corps profilé jusqu'à une température comprise entre 1600°C et 2000°C à partir de la température ambiante, à une pression inférieure ou égale à 1 kPa (0,01 atm), puis l'introduction d'un gaz inerte à une pression comprise entre 50 et 200 pKa (0,5 à 2 atm) et le chauffage du produit obtenu à une température comprise entre 2200°C et 2400°C.

12. Procédé selon la revendication 11, dans lequel l'étape d'introduction du gaz inerte comprend l'introduction du gaz inerte jusqu'à obtention d'une pression de 50 à 200 kPa (0,5 à 2 atm), l'évacuation jusqu'à obtention d'une pression inférieure ou égale à 1 kPa (0,01 atm), et une nouvelle introduction du gaz inerte jusqu'à obtention d'une pression comprise entre 50 et 200 kPa (0,5 à 2 atm).

13. Procédé selon les revendications 10 à 12, dans lequel la solution acide contient au moins de l'acide fluorhydrique.

14. Procédé selon la revendication 13, dans lequel la solution acide contient de l'acide fluorhydrique et de l'acide nitrique.

15. Procédé selon la revendication 14, dans lequel la solution acide contient de l'acide fluorhydrique, de l'acide nitrique et de l'acide sulfurique.

16. Procédé selon les revendications 10 à 15, dans lequel la température du traitement thermique dans la solution acide est supérieure ou égale à 100°C.

# FIG. 1

# FIG. 2

# FIG. 3